(19) Europäisches Patentamt
European Patent Office
Office européen des brevets

(11) EP 4 580 042 A1

(12) EUROPEAN PATENT APPLICATION

(43) Date of publication:
02.07.2025 Bulletin 2025/27

(21) Application number: 23307405.3

(22) Date of filing: 28.12.2023

(51) International Patent Classification (IPC):
H02S 50/00 (2014.01)

(52) Cooperative Patent Classification (CPC):
H02S 50/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: TotalEnergies OneTech
92400 Courbevoie (FR)

(72) Inventors:
• GUILLEMOT, Loïc
92078 PARIS LA DEFENSE CEDEX (FR)
• CABALLERO PENA, Andrea Nataly
92078 PARIS LA DEFENSE CEDEX (FR)

(74) Representative: Lavoix
2, place d'Estienne d'Orves
75441 Paris Cedex 09 (FR)

(54) **METHOD FOR CLASSIFYING OPERATIVE RAW DATA OF AN INVERTER OF A PHOTOVOLTAIC PLANT ; ASSOCIATED COMPUTER PROGRAM PRODUCT AND READABLE INFORMATION CARRIER**

(57) Method (100) for classifying raw data of a time series of a physical quantity related to an inverter of a photovoltaic power plant, the physical quantity being selected among an intensity, a voltage, a power and an energy measured on DC terminals of the inverter and an intensity, a voltage, a power and an energy measured on AC terminals of the inverter, characterized in that the method comprises the step of: acquisition (105) of the time series of raw data over a plurality of successive days; applying (120) a maximum range filter to select each raw data as a candidate data when a time variation thereof is below a first cut off; and, applying (130) a daily maximum filter based on a difference between a value of the candidate data and a maximum value on a day of acquisition of the candidate data, the candidate data being labelled as "Clipping" data when the difference is smaller than a threshold and as "Power Limitation" data when the difference is higher than the threshold.

FIG.2

## Description

The present invention concerns a method for data classification. The present invention also concerns a computer program product.

The article authored by K. Perry, M. Muller and K. Anderson, "Performance Comparison of Clipping Detection Techniques in AC Power Time Series," 2021, IEEE 48th Photovoltaic Specialists Conference (PVSC), 1638-1643, discloses a method for data classification based on logic.

This data classification method is presented to label the raw data of a time series with only one label, i.e. "Clipping".

In addition, the data set used in this prior art document results from a controlled environment and not from a production site.

When the method is applied to such "real" data, it shows major limitations, in particular not only many raw data are labelled as "Clipping", whereas they are not (false positive), but also many raw data corresponding to clipping events are not identified as such (false negative).

Hence, there exists a need for an improved classification method that would work well on real data, i.e. raw data from a production site, while extending the classification result to multiple classes.

To this end, the invention relates to a method for classifying raw data, a computer program product, and a readable information carrier according to the appended claims.

The invention also relates to a computer program product comprising a readable information carrier having stored thereon a computer program comprising program instructions, the computer program being loadable onto a data processing unit and causing a method as previously described to be carried out when the computer program is carried out on the data processing unit.

The invention also relates to a readable information carrier on which a computer program product as previously described is stored.

The invention and its features will be easier to understand in view of the following description, provided solely as an example and with reference to the appended drawings, in which:

- Figure 1 is a schematic view of a photovoltaic plant equipped with a calculator properly programmed for the implementation of the classification method according to the invention;
- Figure 2 is a flowchart of a preferred embodiment of the classification method according to the invention;
- Figure 3 gathers a plurality of graphs, each graph representing raw data of power in time, over one day for graphs A, B and C, and over several successive days for graph D and E.

Generally speaking, the classification method according to the invention allows for the classification of the raw data corresponding to a time series of a physical quantity related to the functioning of the inverter of a photovoltaic set of photovoltaic - PV panels.

The method is preferably able to classified a raw data as: "No Limitation", "Clipping", "PL" (power limitation), "TPL", "SPL", or "LPL".

The method consists in applying different filters off-line on a previously acquired time series.

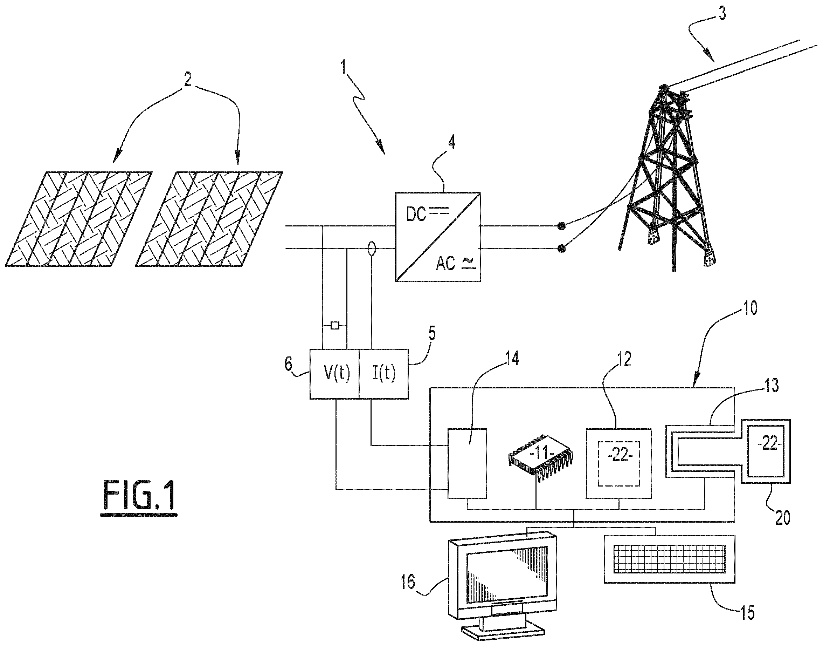

Turning to Figure 1, a photovoltaic power plant 1 comprises a plurality of sets of photovoltaic panels 2.

The plurality of photovoltaic panels 2 of a given set delivers a DC current.

Before being supplied to the grid 3, an inverter 4 converts the DC current from the photovoltaic panels 2 into an AC current.

The inverter 4 is provided with sensors to measure one or several quantities. In the preferred embodiment, these sensors are an intensity sensor 5, to measure the instantaneous intensity $I(t)$ of the DC current on the input terminals of the inverter 4, and a voltage sensor 6 to measure the instantaneous voltage $V(t)$ of the DC current on the input terminals of the inverter 4.

The photovoltaic power plant 1 also comprises a computer 10.

The computer 10 comprises a processing unit 11, a memory unit 12, a reader 13, an interface board 14 and a human machine interface, such as a keyboard 15 and a screen 16.

An information medium 20, which is readable by the reader 13, stores a computer program 22. By way of example, the information medium 20 is a USB key, a floppy disk or flexible disk (of the English name "Floppy disc"), an optical disk, a CD-ROM, a magnetooptical disk, a ROM memory, a memory RAM, EPROM memory, EEPROM memory, magnetic card or optical card.

The computer program 22 comprises instructions, transferable from the information medium 20 to the memory unit 12 when read by the reader 13.

The computer program 22, when its instructions are executed by the processing unit 14, is adapted to entail an implementation of the classification method for raw data classification according to the invention

The interface board 14 is connected to the sensors, 5 and 6, to receive electric signals outputted by each sensors, that correspond to the measures performed by these sensors.

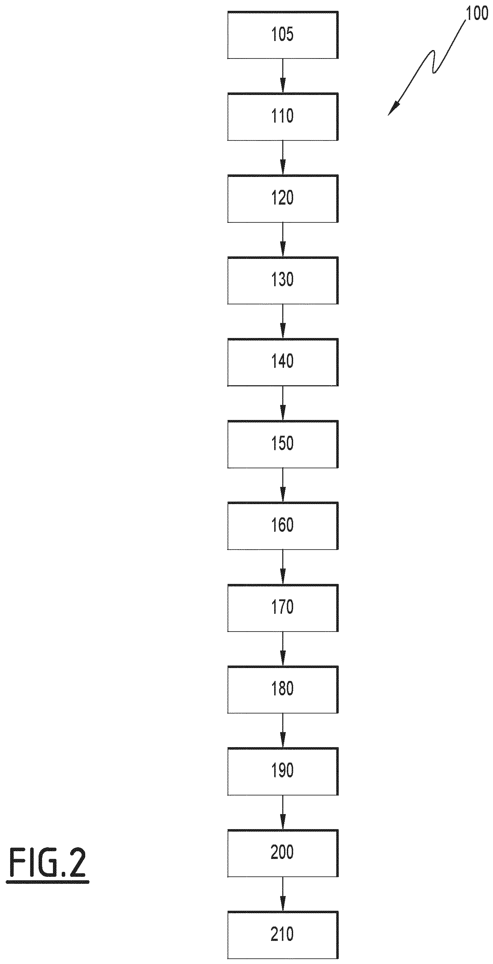

Figure 2 shows a preferred embodiment of the method for raw data classification according to the invention. Method 100 comprises the following steps:

STEP 105 : Data Acquisition

At step 105, a time series of a quantity related to the operation of the inverter 4 is acquired.

For example the quantity of interest is the power on the DC side of the inverter 4. The instantaneous power $p(t)$ is the result of the product of the instantaneous intensity, as measured by sensor 5, and the instantaneous voltage, as measured by sensor 6.

Alternatively, other quantities may be considered, in particular quantities on the AC side of the inverter 4.

Raw data of the instantaneous power are obtained at frequency f, i.e. at a sampling period, or time step, $\Delta t = 1/f$. For example, $\Delta t$ is chosen equal to 5 mn.

Measures are performed continuously over several successive days d.

The corresponding time series is thus made up of raw data: $p(t) = p(k. \Delta t)$, where k is an integer between 0, at the start of the acquisition period, and N, at the end of the acquisition period.

Rather than using time t, it is equivalent to use integer k to identify each raw data, i.e. each instantaneous power $p(k)$, as what is done in the following.

STEP 110 : Smoothing

A sliding average data, $\hat{p}(k)$, is computed from the raw data $p(k)$, based on a first sliding window W1.

For example, the length of the first sliding window is chosen equal to 2w+1 time steps. Other length for averaging the raw data may be considered, in particular odd or even multiple of the sampling period.

The time length of the first sliding window is thus: $tf_{W1} = (2w + 1). \Delta t$

And the sliding average at time step k is given by:

$$\hat{p}(k) = \frac{1}{2w + 1} \sum_{i=-w}^{i=+w} p(k + i)$$

This step is advised when the sampling period $\Delta t$ is equal or inferior to 15 mn. Otherwise, the time series of raw data is considered smooth enough, and the raw data can be considered directly, without the need to smooth them.

STEP 120 : Max Range Filter

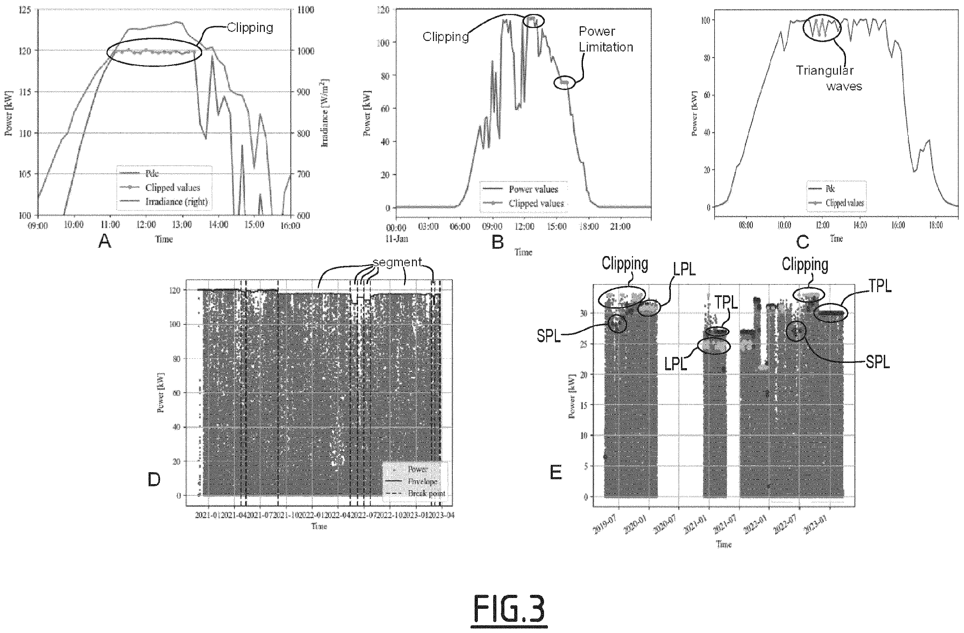

As illustrated by graph A in figure 3, when a clipping event occurs during a day it characterizes itself by a succession of raw data having roughly the same value.

A maximum range filter applied in step 120 on the raw data is based on this feature.

Thus, in this step, a minimum value $\hat{p}_{min}(k)$ and a maximum value $\hat{p}_{max}(k)$ are first determined using a second moving window W2.

For example, the length of the second moving window W2 is chosen equal to 2s+1 time steps.

The time length of the second sliding window is thus: $tf_{W2} = (2s + 1). \Delta t$, where s is an integer (preferably greater than $w$).

The minimum value and a maximum value of the sliding average $\hat{p}$ are defined as, for each time step k:

$$\hat{p}_{min}(k) = \min_{-s \leq i \leq s} \hat{p}(k + i)$$

$$\hat{p}_{max}(k) = \max_{-s \leq i \leq s} \hat{p}(k + i)$$

The maximum rolling range at time k, $R_{max}(k)$, is then computed based on the following definition:

$$R_{max}(k) = \frac{\hat{p}_{max}(k) - \hat{p}_{min}(k)}{\frac{\hat{p}_{max}(k) + \hat{p}_{min}(k)}{2}} * 100$$

The maximum power $P_{max}$ of the installation on the whole time series can be computed during this same step. It is defined as:

$$P_{max} = \max_{0 \leq k \leq N} \hat{p}(k)$$

The condition of the Max Range Filter is derived from the fact that, when clipping does occur, the instantaneous power is nearly constant on a time interval, i.e. the maximum rolling range $R_{max}(k)$ is small.

A cut off C1 is thus defined. For example C1 is chosen equal to 0.2. The cut-off is empirically chosen and could be adapted to each use case.

The condition of the Max Range Filter can be expressed as:

$$\text{if } R_{max}(k) \leq C1, \text{ then } \forall i \, \epsilon \, [k - s; k + s], \, Label[p(k)] = "Clipping"$$

In other words, each raw data $p(k)$ that contributes to the sliding average data $\hat{p}(k)$ associated with a value of the maximum rolling range $R_{max}(k)$ inferior or equal to the first cut off C1, is labelled as *"Clipping"*.

At the end of step 120, a first set S1 of raw data is obtained. Each data belonging to set S1 is labelled as *"Clipping"*, i.e. is selected as a potential clipping data, or candidate data.

For the three following steps, the first set S1 is segmented per day of the data acquisition to obtain a plurality of daily first set S1 $|_d$.

The method 100, thus comprises a loop for each day d, wherein step 130, 140 and 150 are iterated.

STEP 130: Max Filter

A daily maximum filter is applied to the data labelled as *"Clipping"* to deal with the raw data $p(k)$ that are not actually corresponding to a real clipping event, even if they were labelled as such in step 120.

As illustrated by graph B in figure 3, it is the case for raw data associated with a power limitation - PL, for example imposed by the grid operator (i.e. a curtailment event), during the day, and consequently that have to be associated with the label "*PL*".

Such raw data presents the feature of not being near the maximum power of the installation, but to have a reduced power compared to the maximum power of that day $P_{max|d}$, defined as:

$$P_{\max|d} = \max_{k, k.\Delta t \in d} p(k)$$

Note that a raw data of set S1 $|_d$ is not isolated in time, but belong to a group of raw data that follow each other in time. This group is called an event. In fact an event is at least made up of 2w+1 successive raw data, since this is the sliding average that is used in step 120 with the possible output that each raw data contributing to the sliding average data be labelled as *"Clipping"*.

An event E thus comprises a succession in time of a plurality of n raw data, starting from time t0 (or k0).

For each event of S1$|_d$, the maximum power of each event $P(E)$ is first identified.

The max power $P(E)$ is then compared to $P_{max|d}$ using a criteria on the gap between these two values: For example the criteria involves a threshold:

$$\text{if } \frac{P_{max|d} - P(E)}{P_{max|d}} * 100 > 0.5, \text{ then } \forall i \, \epsilon \, [k0; k0 + n], \, Label[p(i)] = "PL"$$

In other words, with this condition, each raw data $p(k)$ of an event of S1$|_d$ whose max power is far from the maximum power of the day, is relabeled as corresponding to a power limitation - "PL".

On the contrary, when the average power of the event is near the maximum power on the day under consideration, each raw data forming this event keeps its original label, i.e. *"Clipping"*.

Alternatively or in addition, this max filter could be based on the comparison of the time at which the event occurs and the maximum production hour of the day (usually around noon).

STEP 140: Triangular Waves Filter

An event of raw data can exhibit a "triangular" shape, as illustrated in graph C in figure 3.

Such a "triangular waves" event can however be identified as clipping in step 120, because the variation of the instantaneous power between successive time steps is smoothed, leading to a max range value below the first cut-off C1. In other words, the slope between a first pair of raw data is cancelled out by the opposite slope between a second pair of raw data of the same event.

Thus, to eliminate such triangular waves events from the set $S1|_d$, a triangular waves filter is applied. It consists in computing a criteria based on statistical parameters of the distribution of the clipping data in the same event than the data under consideration. More specifically, the mean and standard deviation of each event E are computed:

$$\hat{p}(E) = \frac{1}{n} \sum_{j=1}^{n} p(k0 + j)$$

$$\sigma(E) = \sqrt{\frac{1}{n} \sum_{j=1}^{n} (p(k0 + j) - \hat{p}(E))^2}$$

And then, the standard deviation $\sigma(E)$ is compared to a second cut-off C2:

$$\text{if } \sigma(E) > C2, \text{ then } \forall j \, \epsilon \, [k0; k0 + n], \, Label[p(j)] = \text{"No Limitation"}$$

In this constraint, wherein C2 is based on $P_{max}|d$. For example: $C2 = 0.5\% * P_{max}|d$.

In other words, if the raw data forming the event are too dispersed, it means that this event is a false positive clipping event and that the corresponding raw data have to be discarded from $S1|_d$. The label *"No Limitation"* is used as an intermediary label.

STEP 150: Range Filter

To cope with the variability that is usually present in the real data and cancelled out by the averaging of step 110, a Range Filter is applied. Its aim is to add more raw data to the set S1|d to take into account a noise on the raw data.

The mean value $\hat{p}(E)$ and the standard deviation $\sigma(E)$ calculated in step 140 are considered to compute upper and lower limits for each clipping event in day d under consideration.

An upper limit *Lup|d* is calculated for example as the mean value plus two times the standard deviation and a lower limit *Llow|d* is calculated for example as the mean value minus two times the standard deviation.

Any raw data of that same day in between these lower and upper limits is then labelled as "Clipping":

$$\text{if } Llow|d \leq p(k) \leq Lup|d \text{ then } Label[p(k)] = \text{"Clipping"}$$

STEP 160: PMax Filter

Out of the loop on the day d, step 160 of method 100 consists in applying a maximum power filter on the set S1 to eliminate false positives, in particular raw data corresponding to small power values.

This filter is defined as follows:

$$\text{if } p(k) \leq 0.99 \, . \, P_{max} \text{ then } Label[p(k)] = \text{"TPL"}$$

If the raw data meets this condition, it is not longer labelled as a clipping event (label *"Clipping"*), but as a power limitation at the top event (label Top Power Limitation - *"TPL"*).

STEP 170: New daily clipping filter

Step 170 seeks to add to each set S1|d those raw data that are not identified as belonging to a clipping event because they belong to a short event.

First, for each day d, the minimum power of the raw data of S1|d (i.e. the daily minimum of the clipping events) is determined:

$$P_{min,d} = \min_{S1|d} p(k)$$

Then, from this set of minimums, an interpolation is performed to obtain a minimum value for every day of the time series, in particular those days that do not have identified clipping events and therefore are not referenced in S1.

Finally, all raw data of a given day d greater than the minimum value for that day is labelled as "Clipping" and add to set S1.

The daily clipping filter is thus defined as:

$$\text{If } p(k) > P_{\min|d} \text{ then } Label[p(k)] = "Clipping"$$

STEP 180: Break points identification

Step 180 aims at identifying, throughout the acquisition period analyzed, the break points, defined as the points in time where the maximum power changes.

To do so, the daily maximum power is extracted.

$$P_{\max|d} = \max_{d} p(k)$$

The outliers raw data on the set of maximums defined before are then eliminated using an interquartile criteria.

Among the remaining raw data, a moving average is performed first and then an interpolation is applied to fill any gaps in the moving average. Finally an envelope of the averaging values is determined.

From this envelope, the break points throughout the time series are identified using a window-based change point detection function. Preferably, the function is selected in the Ruptures Python library, which is a package providing methods for the off-line analysis and segmentation of non-stationary signals.

For example, the 'l2' function is used, with a width of 10 and a default number of break points of 30. It should be noted that 30 is set as default knowing that it is well above the true number of break points and that the resulting list of break point has to be filtered to obtain the correct number of break points.

That is why the break points are filtered using the mean of the envelope on each segment. So if the difference of the mean of two consecutive segments is less than 1%, the break point at the border of these two segments must be eliminated from the result list L1.

This is illustrated by graph D in figure 3, showing the plurality of segments identified into the whole time series.

STEP 190: Type of event by segment

The next step 190 of method 100 is to attribute, to each segment delimited by break points of list L1, a type of event.

For each segment, it is first checked whether there are raw data associated with the label "Clipping" inside the segment. If this is the case, the segment is named a "Clipping Segment", and each raw data in such a segment, that is already labelled as "TPL", is now relabeled as Power Limitation - "PL".

Then if there is no clipping raw data, it is checked whether there are raw data inside the segment associated with the label "TPL". In this case, the segment is named as "Top Limitation Segment.

Finally, in the case where none of the two above checks are met, then the segment is named as "Other Limitation Segment".

STEP 200: TPL events cleaning

In step 200, all the raw data labelled as "TPL" located far from the envelope defined in step 180, i.e. raw data having a difference of more than 1% outside the envelope, will be relabeled as "PL".

The range filter of step 150 is reapplied but only for "TPL" raw data of a given Top Limitation Segment.

More specifically, for each segment named as "Top limitation Segment", the mean and standard deviation of the raw data marked as "TPL" within this segment are computed. And then all the raw data lying between the limits defined as the mean plus or minus two times the standard deviation are labelled as "TPL".

STEP 210: 'SPL' and 'LPL' labelling

The objective of step 210 is to separate the remaining "PL" raw data into two categories: Spontaneous Power Limitation ("SPL" label) and Long lasting Power Limitation ("LPL" label).

For this purpose, the "PL" raw data are grouped. The "PL" raw data are successively considered. The average power of the current "PL" raw data is compared with the average power of the previous "PL" raw data. If there is only a small difference between these two values, the current "PL" raw data is assigned to the same group as the previous "PL" raw data.

However, if this difference is large, then a new group is associated with the current "PL" raw data.

Then, each "PL" raw data belonging to a group spanning on more than for example eight days, is marked as "LPL" and "SPL" otherwise.

The result of the labelling process is illustrated by graph E in figure 3.

In conclusion, the method according to the invention allows the labelling of a greater number of raw data than the method according to the state of the art. Furthermore, it gives complete events, i.e. events that are well defined from start to finish, with a clear separation between events into different categories.

The power limitation associated with each event is more in line with the real operative conditions, in connection both with the environmental condition (luminance) and the maximum capacity of the inverter (nominal value or downgraded value due to a defect).

The classification of the raw data according to the invention provides an independent way to identify events. This is particularly relevant to check that the curtailment events as indicated by the grid operator match the power limitation events as detected by the power plant operator.

The classification results obtained with the implementation of method according to the invention can be used to identify defects affecting an inverter of the power plant, for example by comparing the classification results of two separate sets of PV panels.

**Claims**

1. Method (100) for classifying raw data of a time series of a physical quantity related to an inverter (4) of a photovoltaic power plant (1), the physical quantity being selected among an intensity, a voltage, a power and an energy measured on DC terminals of the inverter and an intensity, a voltage, a power and an energy measured on AC terminals of the inverter, **characterized in that** the method comprises the step of:

   - acquisition (105) of the time series of raw data over a plurality of successive days;
   - applying (120) a maximum range filter to select each raw data as a candidate data when a time variation thereof is below a first cut off; and,
   - applying (130) a daily maximum filter based on a difference between a value of the candidate data and a maximum value on a day of acquisition of the candidate data, the candidate data being labelled as "Clipping" data when the difference is smaller than a threshold and as "Power Limitation" data when the difference is higher than the threshold.

2. The method according to claim 1, further comprising the step of smoothing (110) the raw data of the time series over a first sliding window, to obtain a time series of smoothed data, the maximum range filter using the smoothed data associated to the raw data to decide whether the raw data is a candidate data.

3. The method according to claim 2, wherein applying (120) the maximum range filter consists in:

   - computing minimum and maximum values of the smoothed data $\hat{p}$ at time step k:

$$\hat{p}_{min}(k) = \min_{-s \leq i \leq s} \hat{p}(k+i)$$

$$\hat{p}_{max}(k) = \max_{-s \leq i \leq s} \hat{p}(k+i)$$

   - computing a maximum rolling range at time k, $R_{max}(k)$, defined as:

$$R_{max}(k) = \frac{\hat{p}_{max}(k) - \hat{p}_{min}(k)}{\frac{\hat{p}_{max}(k) + \hat{p}_{min}(k)}{2}} * 100$$

each raw data $p$ at time $k$ that contributes to the smoothed data $\hat{p}(k)$ associated with a value of the maximum rolling range $R_{max}(k)$ inferior or equal to the first cut off, is selected as a candidate data.

4. The method according to claim 3, further comprising the steps of applying (140) a triangular waves filter to deselect a "Clipping" data when an instantaneous variation of the value thereof is higher than a criteria based on statistical parameters of a distribution of the "Clipping data" belonging to a same clipping event than the "Clipping" data under consideration.

5. The method according to any one of the previous claims, further comprising the steps of:

   - identifying (180) in the time series of raw data each break point, a break point being defined as a point in time where a maximum value of the raw data of the time series changes; and,
   - relabelling (190) each candidate data within a segment delimited by two successive break points, based on a number of "Clipping" data or "Power Limitation" data in the segment.

6. The method according to claim 5, wherein identifying each break points consists in:

   - computing, for each day, a daily maximum value for the raw data $p$ at time k :

$$P_{\max|d} = \max_d p(k)$$

   - using a window-based change point detection function parametrized with the daily maximum values to identify the break points throughout the time series.

7. The method according to claim 5 or claim 6, further comprising the step of applying (160) a maximum power filter on the "Clipping" data to relabel a "Clipping" data as a "Top Power Limitation" data when the value thereof is under a predefined percentage of the maximum value of the raw data on the whole time series.

8. The method according to claim 7, wherein, for each segment, if there is one "Clipping data" inside the segment, each "Top Power Limitation" data is relabeled as a "Power Limitation" data.

9. A computer program product comprising a readable information carrier having stored thereon a computer program comprising program instructions, the computer program being loadable onto a data processing unit and causing a method according to any one of claims 1 to 8 to be carried out when the computer program is carried out on the data processing unit.

10. A readable information carrier on which a computer program product according to claim 9 is stored.

FIG.1

FIG.2

FIG.3

Europäisches
Patentamt

European
Patent Office

Office européen
des brevets

# EUROPEAN SEARCH REPORT

**Application Number**

EP 23 30 7405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/238918 A1 (LAMBERT ARNAUD [BE] ET AL) 27 July 2023 (2023-07-27) | 1,2,9,10 | INV. H02S50/00 |
| A | * paragraphs [0057] - [0107]; claims 1-5,11; figures 4-11 * | 3-8 | |
| X | US 2012/084027 A1 (CAINE HOLDEN R [US]) 5 April 2012 (2012-04-05) | 1,2,9,10 | |
| A | * paragraphs [0043] - [0074]; claims 1-4; figures 1-7 * | 3-8 | |
| A | JP 2018 088761 A (HITACHI LTD; TOHOKU ELECTRIC POWER CO) 7 June 2018 (2018-06-07) * paragraphs [0040] - [0102]; figures 1-6 * | 1-10 | |

**TECHNICAL FIELDS SEARCHED (IPC)**

H02S

The present search report has been drawn up for all claims

| Place of search | Date of completion of the search | Examiner |
|---|---|---|
| The Hague | 17 June 2024 | Boero, Mauro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 7405

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2024

| Patent document cited in search report | Publication date | Patent family member(s) | Publication date |
|---|---|---|---|
| US 2023238918 A1 | 27-07-2023 | BE 1027887 B1 | 13-07-2021 |
| | | CL 2022003633 A1 | 21-04-2023 |
| | | EP 4169158 A1 | 26-04-2023 |
| | | US 2023238918 A1 | 27-07-2023 |
| | | WO 2021255269 A1 | 23-12-2021 |
| US 2012084027 A1 | 05-04-2012 | NONE | |
| JP 2018088761 A | 07-06-2018 | JP 6764772 B2 | 07-10-2020 |
| | | JP 2018088761 A | 07-06-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. PERRY** ; **M. MULLER** ; **K. ANDERSON**. Performance Comparison of Clipping Detection Techniques in AC Power Time Series. *IEEE 48th Photovoltaic Specialists Conference (PVSC)*, 2021, 1638-1643